# EUROPÄISCHE PATENTSCHRIFT

(11) **EP 1 288 110 B1**
(45) Veröffentlichungstag und Bekanntmachung des Hinweises auf die Patenterteilung: **11.06.2008**
(21) Anmeldenummer: 02014200.6
(22) Anmeldetag: 26.06.2002
(51) Int. Cl.: B62D 25/12, B60J 5/10, E05D 7/00

(54) **Kraftfahrzeug, insbesondere Personenwagen, mit einer am Aufbau des Kraftfahrzeugs über eine Scharniereinrichtung schwenkbar angelenkten Klappe**
Motor vehicle, particularly passenger vehicle with a lid pivotably mounted to the vehicle body by hinge means
Véhicule automobile, notamment voiture particulière avec un hayon monté de manière pivotante à la carosserie par un mécanisme de charnière

(30) Priorität: 25.08.2001 DE 10141789
(43) Veröffentlichungstag der Anmeldung: 05.03.2003
(73) Patentinhaber: Dr. Ing. h.c. F. Porsche Aktiengesellschaft, 71287 Weissach (DE)
(72) Erfinder: Pfertner, Kurt, 71254 Ditzingen (DE); Armbruster, Reiner, 75417 Mühlacker (DE)

(56) Entgegenhaltungen:
- DE-A- 3 619 943
- DE-A- 19 948 461
- DE-A- 19 963 428
- DE-U- 29 701 617
- US-A- 4 679 841

## Beschreibung

Die Erfindung bezieht sich auf ein Kraftfahrzeug, insbesondere Personenwagen, mit einer am Aufbau des Fahrzeugs über eine Scharniereinrichtung schwenkbar angelenkten Klappe, gemäß Oberbegriff des Anspruchs 1.

Ein gattungsgemäßes Fahrzeug ist beispielsweise in der DE 36 19 943 A1 beschrieben. Es besitzt eine Heckklappe, die am Aufbau des Kraftfahrzeugs über eine Scharniereinrichtung schwenkbar gehalten ist, so dass eine Klappenöffnung verschlossen bzw. freigegeben werden kann. Die Scharniereinrichtung umfasst ein aufbauseitiges und ein klappenseitiges Beschlagteil, die mit zumindest einer wenigstens zwei Lenker aufweisenden Mehrlenkeranordnung relativ zueinander schwenkbar verbunden sind. Die Mehrlenkeranordnung ist bei dem bekannten Kraftfahrzeug als Gelenkviereck ausgebildet und besitzt folglich zwei Lenker.

Aufgabe der Erfindung ist es, ein Kraftfahrzeug der eingangs genannten Art zu schaffen, bei dem die schwenkbar angelenkte Klappe relativ zur Klappenöffnung ausrichtbar ist.

Gelöst wird diese Aufgabe mit einem Kraftfahrzeug mit den in Anspruch 1 genannten Merkmalen. Weitere, die Erfindung ausgestaltende Merkmale enthalten die Unteransprüche.

Die mit der Erfindung hauptsächlich erzielten Vorteile sind darin zu sehen, dass die schwenkbar am Aufbau angelenkte Klappe gegenüber dem Aufbau bzw. relativ zur Klappenöffnung einstellbar ist, wodurch sich bei geschlossener Klappe, beispielsweise Heckklappe, definierte Spaltmaße zwischen Klappe und dem die Klappenöffnung umgebenden Aufbau ergeben. Außerdem ist mit der vorgeschlagenen Ausbildung der Scharniereinrichtung diese Einstellung einfach und ohne großen Aufwand durchzuführen.

Durch die um einen Winkel versetzte Anordnung der beiden Langlöcher zueinander ist außerdem eine stufenlose und sehr genaue Einstellmöglichkeit gegeben.

Bei einer Weiterbildung nach Anspruch 2 ist vorteilhaft, dass die Einstellmöglichkeit der Klappe gegenüber dem Aufbau um eine zweite Einstellrichtung erweitert wird.

Ist die Mehrlenkeranordnung ein Gelenkviereck, wie in Anspruch 3 angegeben, ergibt sich ein vorteilhafter Öffnungsverlauf der Klappe, wobei hier insbesondere zunächst ein Ausheben der Klappe und dann ein Schwenköffnen vorgesehen ist.

Nach einer Weiterbildung mit den in Anspruch 4 genannten Merkmalen ist eine Einstellmöglichkeit der Klappe etwa in Richtung der Fahrzeughochachse gegeben, wodurch die Klappe in ihrer Schließstellung zu einer am Aufbau angeordneten Klappendichtung ausrichtbar ist. Zusätzlich kann die Klappe innerhalb der Klappenöffnung durch Verschieben eingestellt werden.

Die Erfindung wird nachfolgend anhand von Ausführungsbeispielen mit Bezug auf die Zeichnung näher erläutert.

Es zeigen:
- Fig. 1: ein Kraftfahrzeug mit einer Heckklappe in perspektivischer Ansicht,
- Fig. 2 u. 3: unterschiedliche Perspektiven auf die in Teilöffnungsstellung liegende Heckklappe und
- Fig. 4: eine Scharniereinrichtung für die Heckklappe.

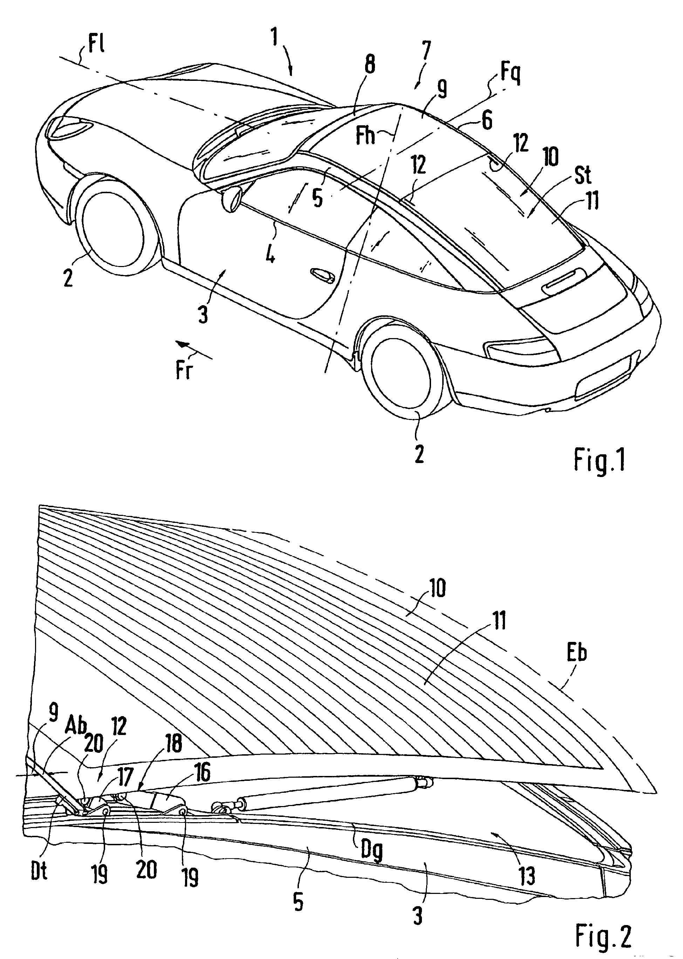

Fig. 1 zeigt ein Kraftfahrzeug 1, insbesondere Personenwagen, mit einem von Rädern 2 getragenen Aufbau 3. Oberhalb einer Gürtellinie 4 des Aufbaus ist zwischen sich bogenförmig über der Gürtellinie 4 erstreckenden Dachlängsholmen 5 und 6 eine Dachanordnung 7 eingesetzt, die einen eine Dachöffnung 8 zumindest teilweise freigebenden und verschließenden Deckel, insbesondere Schiebedeckel 9, besitzt, wobei dieser Schiebedeckel 9 absenkbar und unter eine Klappe 10 entgegen der Fahrtrichtung Fr verschiebbar ist. Die Dachlängsholme können Teile des Aufbaus 3 sein. Die Klappe 10 ist vorzugsweise eine Heckklappe, in die eine Sichtscheibe 11 eingesetzt ist. Ferner ist die Klappe 10 über beispielsweise zwei Scharniereinrichtungen 12 schwenkbar am Aufbau 3 des Fahrzeugs angelenkt, so dass sie entgegen der Fahrtrichtung Fr geöffnet werden kann und in Schließstellung St eine vom Aufbau begrenzte Klappenöffnung 13 verschließt. An dem Aufbau 3 oder der Innenseite der Heckklappe 10 kann überdies eine der Klappenöffnung 13 zugeordnete Klappendichtung Dg angeordnet sein, auf der die Heckklappe in Schließstellung St dichtend aufliegt.

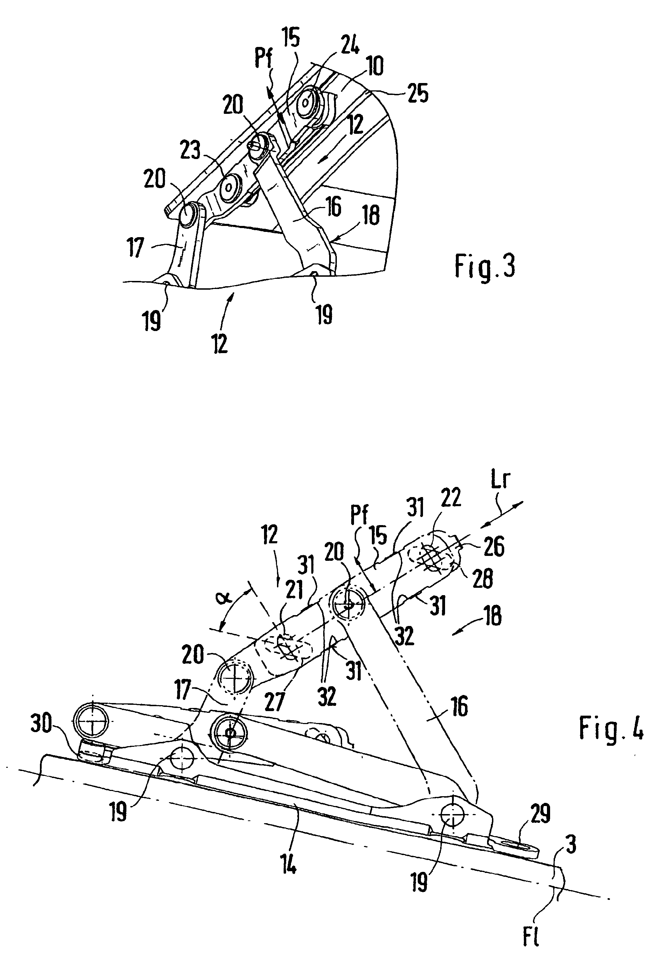

Gemäß Fig. 4 besitzt die Scharniereinrichtung 12 zwei Beschlagteile, wobei ein aufbauseitiges Beschlagteil 14 mit dem Aufbau 3 und ein klappenseitiges Beschlagteil 15 mit der Klappe 10 verbunden ist, wie dies auch in Fig. 3 dargestellt ist. Die beiden Beschlagteile 14 und 15 sind über eine wenigstens zwei Lenker 16 und 17 umfassende Mehrlenkeranordnung 18 relativ zueinander schwenkbar verbunden sind. Jeder Lenker 16 und 17 ist jeweils über eine erste Schwenkachse 19 mit dem aufbauseitigen Beschlagteil 14 verbunden und über jeweils eine zweite Schwenkachse 20 am klappenseitigen Beschlagteil 15 angelenkt. In Fig. 4 ist im Übrigen die Mehrlenkeranordnung 18 in durchgezogenen Linien bei in Schließstellung St vorliegender Heckklappe 10 und in strichpunktierten Konturen bei geöffneter Heckklappe 10 dargestellt.

Das klappenseitige Beschlagteil 15 ist mit zwei beabstandet zueinander liegenden ersten Langlöchern 21 und 22 versehen, durch die, vorzugsweise lösbare, Befestigungselemente 23 und 24 (Fig. 3) hindurchgreifen und an der Heckklappe 10, insbesondere an deren an der Klappeninnenseite liegenden, vorzugsweise umlaufenden, Klappenrahmen 25, festgelegt sind. Die Befestigungsmittel 23 und 24 sind vorzugsweise als Schrauben ausgebildet, die mit ihrem Gewinde in dem Klappenrahmen 25 eingeschraubt sind. Zwischen der Klappe 10 und dem klappenseitigen Beschlagteil 15 ist ein Einstellschieber 26 angeordnet, der zwei mit Abstand zueinander angeordnete zweite Langlöcher 27 und 28 besitzt, von denen jedes unter einem Winkel α zu dem ihm zugeordneten ersten Langloch 21 bzw. 22 verläuft, wobei dieser Winkel α größer 0° und kleiner 90° ist und im gezeigten Ausführungsbeispiel etwa 45° beträgt. Bei einer Verschiebung in Längsrichtung Lr des Einstellschiebers 26 relativ zum klappenseitigen Beschlagteil 15 wird so das klappenseitige Beschlagteil 15 relativ zur Klappe 10 bewegt und die Befestigungselemente 23 und 24 parallel innerhalb des jeweiligen Langlochs 21 bzw. 22 rechtwinklig zur Längsrichtung Lr verschoben, wodurch die Heckklappe 10 etwa in Richtung der Fahrzeughochachse Fh in ihrem Abstand zum Aufbau 3 bzw. zur Klappendichtung Dg hin stufenlos verstellbar ist, wie dies durch einen Pfeil Pf in Fig. 3 und 4 angedeutet ist. Im gezeigten Ausführungsbeispiel sind die ersten Langlöcher 21 und 22 hierfür etwa rechtwinklig zur Ebene Eb ausgerichtet, in der die Heckklappe 10 und die ihr zugeordnete Sichtscheibe 11 liegen.

Zusätzlich kann für die Einstellung der Heckklappe 10 innerhalb der Klappenöffnung 13 das aufbauseitige Beschlagteil 14 relativ zum Aufbau 3 verschoben werden. Hierfür sind am aufbauseitigen Beschlagteil 14 Langlöcher 29 und 30 vorgesehen, durch die hier nicht dargestellte Verbindungselemente hindurchgreifen, die im Aufbau 3 festlegbar sind. Die Langlöcher 29 und 30 sind beispielsweise so orientiert, dass sich eine Verstellmöglichkeit der Heckklappe 10 etwa in Richtung der Fahrzeuglängsachse FI oder quer dazu, also in Richtung der Fahrzeugquerachse Fq, ergibt, wodurch eine genaue Einstellung des Abstandes Ab (Fig. 2) zwischen Klappe 10 und Schiebedeckel 9 bzw. der dazwischen angeordneten Dichtung Dt gegeben ist.

Der Einstellschieber 26 kann als Blechteil ausgeführt sein und ist in Längsrichtung Lr verschieblich am klappenseitigen Scharnierteil 15 gehalten. Hierfür können am Einstellschieber 26 Haltelaschen 31 (Fig. 4) vorgesehen sein, die das klappenseitige Beschlagteil 15 teilweise umgreifen und vorzugsweise in Nuten 32 geführt sind, die am klappenseitigen Beschlagteil 15 ausgebildet sind.

## Patentansprüche

1. Kraftfahrzeug, insbesondere Personenwagen, mit einer am Aufbau des Kraftfahrzeugs über eine Scharniereinrichtung schwenkbar angelenkten Klappe, beispielsweise Heckklappe, zum Freigeben und Verschließen einer Klappenöffnung, welche Scharniereinrichtung ein aufbauseitiges und ein klappenseitiges Beschlagteil umfasst, die mit zumindest einer wenigstens zwei Lenker aufweisenden Mehrlenkeranordnung relativ zueinander schwenkbar verbunden sind, **dadurch gekennzeichnet, dass** das klappenseitige Beschlagteil (15) für die Befestigung an der Klappe (10) wenigstens ein Langloch (21, 22) besitzt, dass zwischen dem klappenseitigen Beschlagteil (15) und der Klappe (10) ein Einstellschieber (26) angeordnet ist, der wenigstens ein zweites Langloch (27, 28) aufweist, dass durch beide Langlöcher (21 und 27, 22 und 28) ein Befestigungselement (23, 24) hindurchgreift und an der Klappe (10) befestigt ist und dass das zweite Langloch (27, 28) unter einem Winkel (α) zum ersten Langloch (21, 22) verläuft, wobei dieser Winkel α größer 0° und kleiner 90° beträgt.

2. Kraftfahrzeug nach Anspruch 1, **dadurch gekennzeichnet, dass** das aufbauseitige Scharnierteil (14) gegenüber dem Aufbau (3) verschiebbar angeordnet ist.

3. Kraftfahrzeug nach Anspruch 1, **dadurch gekennzeichnet, dass** die Mehrlenkeranordnung (18) ein Gelenkviereck ist.

4. Kraftfahrzeug nach Anspruch 1, **dadurch gekennzeichnet, dass** das erste Langloch (21, 22) etwa rechtwinklig zur Ebene (Eb) der Klappe (10) verläuft und dass das aufbauseitige Beschlagteil (14) etwa in Richtung der Fahrzeuglängsachse (F1) verschiebbar am Aufbau (3) gehalten ist.

5. Kraftfahrzeug nach Anspruch 2 oder 4, **dadurch gekennzeichnet, dass** das aufbauseitige Beschlagteil wenigstens ein Langloch (29, 30) aufweist, durch das ein Verbindungselement hindurchgreift, und dass das Langloch (29, 30) etwa in Richtung der Fahrzeuglängsachse (FI) oder rechtwinklig dazu ausgerichtet ist.

## Claims

1. Motor vehicle, in particular passenger vehicle, with a lid, for example tailgate, which is coupled pivotably to the motor vehicle body via a hinge means, for opening up and closing a lid opening, which hinge means comprises a body-side and a lid-side fitting part which are connected pivotably relative to each other by means of at least one multi-link arrangement having at least two links, **characterized in that** the lid-side fitting part (15) has, for the fastening to the lid (10), at least one elongated hole (21, 22), **in that** an adjusting slide (26) which has at least one second elongated hole (27, 28) is arranged between the lid-side fitting part (15) and the lid (10), **in that** a fastening element (23, 24) reaches through the two elongated holes (21 and 27, 22 and 28) and is fastened to the lid (10), and **in that** the second elongated hole (27, 28) runs at an angle (α) to the first elongated hole (21, 22), said angle α being greater than 0° and less than 90°.

2. Motor vehicle according to Claim 1, **characterized in that** the body-side hinge part (14) is arranged displaceably in relation to the body (3).

3. Motor vehicle according to Claim 1, **characterized in that** the multi-link arrangement (18) is a four-bar mechanism.

4. Motor vehicle according to Claim 1, **characterized in that** the first elongated hole (21, 22) runs approximately at right angles to the plane (Eb) of the lid (10), and **in that** the body-side fitting part (14) is held on the body (3) in a manner such that it is displaceable approximately in the direction of the longitudinal axis (F1) of the vehicle.

5. Motor vehicle according to Claim 2 or 4, **characterized in that** the body-side fitting part has at least one elongated hole (29, 30) through which a connecting element reaches, and **in that** the elongated hole (29, 30) is oriented approximately in the direction of the longitudinal axis (F1) of the vehicle or at right angles thereto.

## Revendications

1. Véhicule automobile, en particulier voiture particulière, comprenant un volet articulé de manière pivotante à la carrosserie du véhicule automobile par le biais d'un dispositif de charnière, par exemple un hayon arrière, pour libérer et fermer une ouverture de volet, lequel dispositif de charnière comprend une partie de ferrure côté carrosserie et une partie de ferrure côté volet, qui sont connectées de manière pivotante l'une par rapport à l'autre à au moins un agencement à plusieurs bras présentant au moins deux bras, **caractérisé en ce que** la partie de ferrure côté volet (15) possède, pour la fixation au volet (10), au moins un trou oblong (21, 22), **en ce qu'**entre la partie de ferrure côté volet (15) et le volet (10) est disposé un coulisseau d'ajustement (26) qui présente au moins un deuxième trou oblong (27, 28), **en ce qu'**un élément de fixation (23, 24) vient en prise à travers les deux trous oblongs (21 et 27, 22 et 28) et est fixé au volet (10), et **en ce que** le deuxième trou oblong (27, 28) s'étend suivant un angle (α) par rapport au premier trou oblong (21, 22), cet angle α étant supérieur à 0° et inférieur à 90°.

2. Véhicule automobile selon la revendication 1, **caractérisé en ce que** la partie de charnière côté carrosserie (14) est disposée de manière à pouvoir coulisser par rapport à la carrosserie (3).

3. Véhicule automobile selon la revendication 1, **caractérisé en ce que** l'agencement à plusieurs bras (18) est un quadrilatère articulé.

4. Véhicule automobile selon la revendication 1, **caractérisé en ce que** le premier trou oblong (21, 22) s'étend approximativement à angle droit par rapport au plan (Eb) du volet (10) et **en ce que** la partie de ferrure côté carrosserie (14) est maintenue approximativement dans la direction de l'axe longitudinal du véhicule (Fl) de manière à pouvoir coulisser par rapport à la carrosserie (3).

5. Véhicule automobile selon la revendication 2 ou 4, **caractérisé en ce que** la partie de ferrure côté carrosserie présente au moins un trou oblong (29, 30), à travers lequel s'engage un élément de connexion, et **en ce que** le trou oblong (29, 30) est orienté approximativement dans la direction de l'axe longitudinal du véhicule (F1) ou à angle droit par rapport à celui-ci.
